# EUROPÄISCHE PATENTANMELDUNG

(11) **EP 1 241 390 A1**
(43) Veröffentlichungstag der Anmeldung: **18.09.2002**
(21) Anmeldenummer: 02005701.4
(22) Anmeldetag: 13.03.2002
(51) Int. Cl.: F16L 41/02, F16L 47/00, F16L 13/14

(54) **Rohrverbindung mit Fitting**

(30) Priorität: 15.03.2001 DE 10112548
(71) Anmelder: gabo Systemtechnik GmbH, 94559 Niederwinkling (DE)
(72) Erfinder: Aichinger, Alois, 94491 Hengersberg (DE); Dorfner, Stefan, 94347 Ascha (DE); Spiessl, Herbert, 94365 Parkstetten (DE)

(57) **Zusammenfassung**

Die Erfindung betrifft eine Rohrverbindung für Rohrleitungen insbesondere Leitungen für den Transport temperierter Fluide in der Hausinstallation, wie für die Versorgung von Wohnräumen mit Wärme, mit einem Preßfitting (1), beispielsweise ein T-Stück, wobei eine Hauptleitung (5,6) mit größerem Durchmesser mit einer abgehenden Leitung (7) geringeren Durchmessers verbunden ist, wobei die Hauptleitung beidseitig in den Presssitz und die Abzweigleitung mittels eines Steckverbinders (4a) verbunden ist.

## Beschreibung

Die Erfindung bezieht sich auf eine Rohrverbindung vorzugsweise für Wärmetauscher, beispielsweise Register mit einem Fitting zur Verbindung einer ein temperiertes Fluid führenden Hauptleitung mit einer Abzweigleitung geringeren Durchmessers als die Hauptleitung besonders für die Hausinstallation

Solche Rohrverbindungen sind an sich bekannt. Sie werden beispielsweise zur Versorgung mehrerer Wohnräume mit Wärme benötigt, wobei die Hauptleitung einen größeren Durchmesser als die Abzweigleitung aufweist. Die Dimensionen der Leitungen und der Rohrverbindung dürfen dabei nicht über ein gewisses Maß hinausgehen, da sie unsichtbar in dem an den einlagigen Putz angrenzenden Estrich oder in der Raumdecke verlegt sind. Im Wohnbereich dürfen die Abzweigleitungen dürfen 4,0 bis 10,0 mm nicht überschreiten. Daraus folgt, dass bei einer Wanddicke der Leitungen von etwa 1,0 mm nur noch ein sehr begrenzter Innenquerschnitt für die Durchströmung eines Fluids, z.B. eines Wärmetauschermediums, verbleibt. Dieser geringe Durchmesser der Leitungen, darf durch die Rohrverbindungen,.wie Fittings etc. nicht weiter eingeengt werden.

Für Rohrverbindungen dieser Art zwischen einer Hauptleitung und einer Abzweigleitung beispielsweise bei Registerverlegung sind insbesondere Schweißtechniken im Einsatz. Dabei wird im Falle der Vorfertigung die Hauptleitung mit der Abzweigleitung durch Verschweißen mit einem T-Stück verbunden und vor Ort auf der Baustelle die zusätzliche Verbindung der vorgefertigten Register mit der Hauptleitung, d.h. Anschlussleitung durchgeführt.

Eine derartige Verbindungstechnik ist insbesondere mit dem Nachteil vieler Verbindungen und zusätzlich durch die Unzuverlässigkeit der Schweißstellen und damit der Gefahr von Leckagen behaftet.

Der Erfindung, wie sie in den Ansprüchen beschrieben ist, liegt daher die Aufgabe zugrunde, eine Rohrverbindung zu schaffen, die die Nachteile der bekannten Verbindungstechnik mit Sicherheit vermeidet, dabei die vorgegebenen äußeren Einbaumaße nicht überschreitet und die Strömungsquereschnitte nicht mehr als unvermeidbar einengt.

Die mit der Erfindung erzielten Vorteile liegen insbesondere darin, dass einerseits unter Einhaltung der vorgegebenen Einbaumaße durch Verlegung der Abdichtungen in den Rohrquerschnitt der Hauptleitung und für die Abzweigleitung durch eine an dessen Außendurchmesser vorgesehenen Dichtung die Anzahl der Verbindungsstellen erheblich verringert ist und außerdem die Verbindungen zwischen den Haupt- und Abzweigleitungen dicht sind.

Die Erfindung ist nachstehend anhand eines in den Abbildungen dargestellten Ausführungsbeispieles näher erläutert.

Es zeigt:
- Fig. 1: die Seitenansicht einer erfindungsgemäßen Rohrverbindung,
- Fig. 2: einen Teilschnitt durch eine Ausführungsvariante der Fig. 1,
- Fig. 3: eine weitere Ausführungsvariante der Fig.1 und
- Fig. 4: eine Ausführungsvariante der Fig. 3.

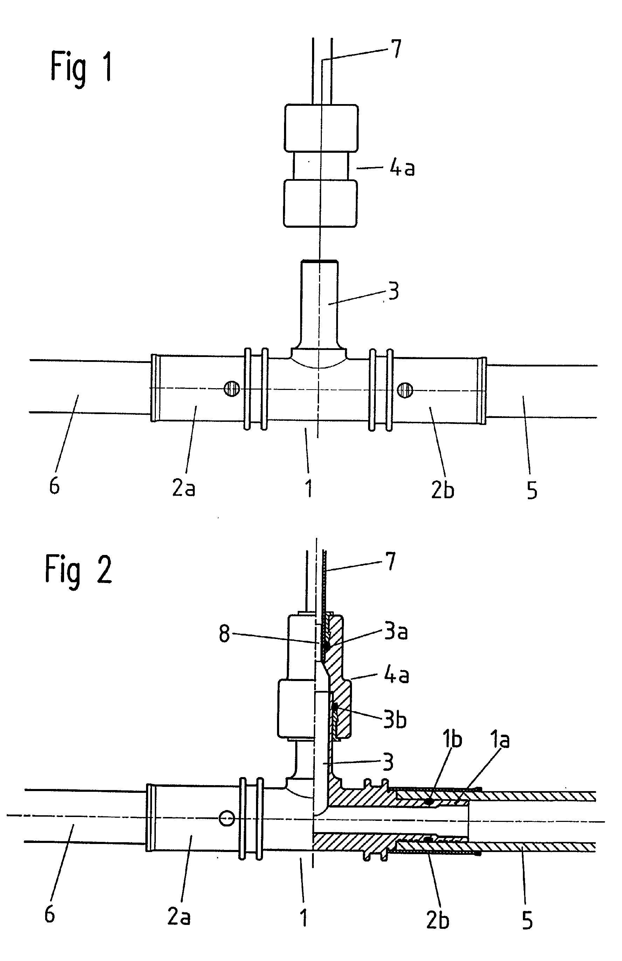

Die in den Figuren 1 und 2 dargestellte Rohrverbindung besteht im wesentlichen aus einem Pressfitting 1, beispielsweise einem T-Stück, den Presshülsen 2a und 2b und der beiden Stränge 5 und 6 einer Hauptleitung größeren Durchmessers sowie einer Abzweigleitung 7 geringeren Durchmessers mit einer Steckverbindung 4 oder 4a.

Die beiden Stränge 5 und 6 Hauptleitung sind dabei auf den jeweilig zugeordneten Stützkörper 1a gesteckt und mittels der Presshülse 2a bzw. 2b in bekannter Weise verpresst. Eine Abdichtung 1b ist in einer Rille des Stützkörpers 1a vorge sehen und dichtet im Bereich dieser Stützhülse 1a die Hauptleitung 5 innerhalb ihres Leitungsquerschnittes ab, während die Abdichtung der Abzweigleitung mittels auf deren Außendurchmesser wirkenden, innerhalb des Steckverbinders 4a vorgesehenen Dichtungen 3a und ggfl. 3b erfolgt.

Somit ist, durch den Einsatz der Pressverbindungstechnik für die Stränge 5 und 6 der Hauptleitung die Abdichtung in den Rohrquerschnitt verlegt, wodurch der Außendurchmesser der Rohrverbindung auch im Bereich der Hauptleitung gering gehalten werden kann. Für die Abzweigleitung 7 wird dagegen eine Steckverbindung 4a eingesetzt und damit die Abdichtung derselben nach außen verlegt, weshalb dafür eine dünnwandige Stützhülse Verwendung finden kann, was ebenfalls eine zu starke Einengung des Strömungsquerschnittes in der Abzweigleitung verhindert.

Bei der in der Fig. 2 dargestellten Ausführungsvariante ist ein an den Fitting 1 angeformter zylindrischer Ansatz 3 für den Anschluss der Abzweigleitung mittels einer Steckverbindungstechnik vorgesehen, dessen Außendurchmesser größer ist, als der Außendurchmesser der anzuschließenden Abzweigleitung 7 und dessen Innendurchmesser mindestens so groß ist wie der dieser Abzweigleitung. Somit kann der Anschluss der Abzweigleitung 7 über einen Doppel-Steckverbinder 4a erfolgen, deren Durchmesser auf der Seite des angeformten zylindrischen Ansatzes 3 größer ist, als auf der Seite der Abzweigleitung 7. Auf diese Weise können mit dem Fitting 1 unterschiedliche Dimensionen von Abzweigleitungen durch Verbinden über Doppel-Steckmuffen mit entsprechender Durchmesser-Kombination hergestellt werden.

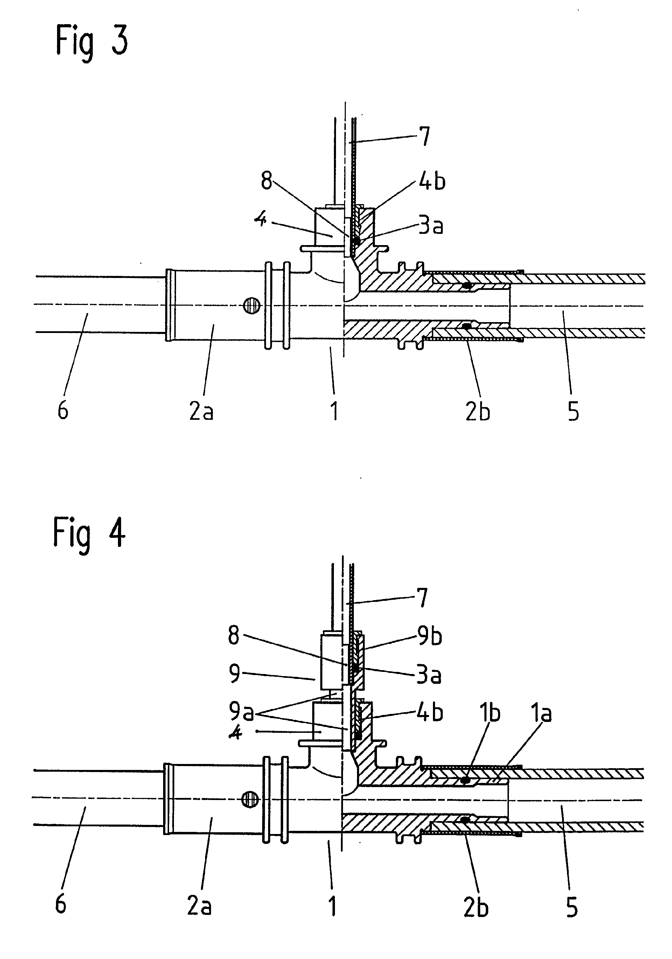

Die Ausführungsvariante gem. Fig. 3 beinhaltet einen Steckverbinder 4b als integrierten Bestandteil des Fittings 1 und eine in die Abzweigleitung 7 stimseitig eingebrachte Stützhülse 8. Die Anbindung der Abzweigleitung 7 an den Fitting erfolgt dabei mittels des Ansatzes 4.

Aus der Fig. 4 geht hervor, dass ein weiterer Steckverbinder 9 für die Abzweigleitung 7 vorgesehen ist, der seinerseits eine in den angeformten Steckverbinder 4b ragende Stützhülse 9a aufweist. Auf der Seite der Abzweigleitung 7 ist ein Steckverbinder 9b vorgesehen, der gegenüber dem integrierten Steckverbinder 4b einen reduzierten Durchmesser aufweist, wobei in die Abzweigleitung 7 stirnseitig eine Stützhülse 8 eingebracht ist, die jedoch nicht mit dem Steckverbinder 9 verbunden ist. Die Anbindung der Abzweigleitung 7 an den Fitting 1 erfolgt, wie bei der Ausführungsvariante gem. Fig. mittels des Ansatzes 4.

Die Erfindung ist selbstverständlich nicht auf die Anwendung bei Wärmetauscher-Registern für die Versorgung von Wohnräumen mit Wärme beschränkt. Sie kann überall dort mit Vorteil eingesetzt werden, wo unter minimalen Raumverhältnissen Strömungsquerschnitte in Rohrverbindungen nicht eingeengt werden dürfen.

### Bezugszeichenliste

- 1: Fitting
- 1a: Stützkörper
- 1b: Dichtelement
- 2a: Preßhülse
- 2b: Presshülse
- 3: zylindrischer Ansatz am Fitting 1
- 3a: Außendichtring an Abzweigleitung
- 3b: Außendichtring am zylindrischen Ansatz
- 4: Ansatz
- 4a: Doppel-Steckverbinder
- 4b: Steckverbinder
- 5,6: Stränge Hauptleitung
- 7: Abzweigleitung
- 8: Stützhülse
- 9a: Zylindrischer Ansatz
- 9b: Steckverbinder

## Patentansprüche

1. Rohrverbindung mit einem Fitting zur Verbindung einer ein temperiertes Fluid führenden Hauptleitung mit einer Abzweigleitung geringeren Durchmessers als die Hauptleitung für die Hausinstallation, **dadurch gekennzeichnet, dass** die beiden Stränge (5,6) der Hauptleitung mit einem am Fitting (1) angeformten Stützkörper (1a) durch eine Presshülse (2a,2b) verbunden sind und mittels eines Dichtelementes (1b) in einer Rille des Stützkörpers (1a) auf der Innenseite der Hauptleitungen (5,6) abgedichtet ist und die Abzweigleitung (7) mittels eines Steckverbinders (4a,4b) mit einem Ansatz (4) des Fittings (1) verbunden ist, wobei die Abdichtung mittels mindestens eines auf der Außenseite der Abzweigleitung (7) vorgesehenen Dichtelementes (3a) vorgesehenen ist.

2. Rohrverbindung nach Anspruch 1, **dadurch gekennzeichnet, dass** der Steckverbinder (4) integraler Bestandteil des Fittings (1) ist und die Abzweigleitung (7) stirnseitig eine Stützhülse (8) eingebracht ist, die nicht mit dem Fitting verbunden ist.

3. Rohrverbindung nach Anspruch 1, **dadurch gekennzeichnet, dass** am Fitting (1) ein zylindrischer Ansatz (3) mit einem gegenüber der Abzweigleitung (7) größeren Durchmesser angeformt ist, auf dem eine Doppel-Steckverbindung (4a) mit integrierten, von außen sowohl den zylindrischen Ansatz (3) als auch die Abzweigleitung (7) abdichtenden, Dichtelementen (3a,3b) angeordnet ist und in die Abzweigleitung (7) stimseitig eine Stützhülse (8) eingebracht ist, die nicht mit dem Fitting (1) oder der Doppel-Steckverbindung (4a) verbunden ist.

4. Rohrverbindung nach Anspruch 1, **dadurch gekennzeichnet, dass** der Steckverbinder (4b) integraler Bestandteil des Fittings (1) ist und in diesen ein weiterer Steckverbinder (9) eingesteckt ist, der auf der Seite des Fittingkörpers (1) einen zylindrischen Ansatz (9a) zum Einstecken und auf der Seite der Abzweigleitung (7) einen Steckverbinder (9b) mit gegenüber dem integrierten Steckverbinder (4b) reduzierten Durchmesser aufweist und dass in die Abzweigleitung (7) stimseitig eine Stützhülse (8) eingebracht ist, die nicht mit dem weiteren Steckverbinder (9) verbunden ist.
